# EUROPEAN PATENT SPECIFICATION

(11) **EP 2 547 974 B1**
(45) Date of publication and mention of the grant of the patent: **07.01.2015**
(21) Application number: 10717772.7
(22) Date of filing: 17.03.2010
(51) Int. Cl.: F27B 1/00, F27B 1/08, F27B 1/10, F27D 99/00, C04B 2/12

(54) **KILN FOR THE PRODUCTION OF CALCIUM OXIDE**
BRENNOFEN ZUR HERSTELLUNG VON CALCIUMOXID
FOUR DESTINÉ À LA PRODUCTION D'OXYDE DE CALCIUM

(43) Date of publication of application: 23.01.2013
(73) Proprietor: Cimprogetti S.p.A., 24044 Dalmine (BG) (IT)
(72) Inventor: FERRI, Vincenzo, I-24044 Dalmine (bergamo) (IT); COLLARINI, Oliviero, I-24044 Dalmine (bergamo) (IT)
(74) Representative: Feltrinelli, Secondo Andrea
(86) International application number: PCT/IB2010/051146
(87) International publication number: WO 2011/114187

(56) References cited:
- WO-A1-2005/106330
- WO-A1-2010/023105
- US-A- 3 544 090
- US-A- 3 887 326
- US-A- 4 097 225
- US-A1- 2001 029 005

## Description

### TECHNICAL FIELD OF THE INVENTION

The present invention relates to a furnace for producing calcium oxide.

More in particular, the present invention relates to a vertical furnace, of the static type, for producing calcium oxide.

### PRIOR ART

As is known, lime for industrial uses is traditionally obtained baking calcareous material into furnaces: the product that comes out of said furnaces consists, in particular, of calcium oxide.

Some of the known furnaces, so called countercurrent-flow vertical, shaft or column furnaces, consist of a large substantially cylindrical container with vertical axis defining a large baking chamber, wherein the calcareous material in the form of stones is introduced from the top, by gravity. This material, in its drop inside the baking chamber, usually crosses a first so called heating zone, an intermediate so called calcination or reaction zone - wherein the calcium oxide is obtained - and finally a third cooling zone, at the outlet whereof it is sent towards a discharge region of the baking product.

The baking of the calcareous material is obtained by one or more burners arranged in particular in the above calcination zone: such burners are usually inserted into side openings passing through the container wall, so as to penetrate inside the chamber by a certain depth; the latter clearly depends on the furnace size and on that of the burners themselves, for which a certain mechanical resistance to the action exerted by the drop of the calcareous material must be ensured.

These known furnaces, which may be even of considerable size to meet large production requirements, feature a significant unevenness of the thermal load inside the baking chamber, which causes a consequent unevenness also in the calcination of the calcareous material. In particular, especially for large-diameter furnaces, there are zones in the chamber, especially those closer to the burner inlets, where the thermal load is very high, and whereat even excessive baking conditions may be reached, and other zones, that is, those further from the burner inlets, where the thermal load is not as much high, and therefore unsatisfactory baking conditions, and thus of calcination of the material, are there obtained.

This unevenness of the thermal load translates, finally, into a quality of the product coming out of the furnace which often does not fulfil the expectation of the modern lime market.

WO-A 2005/106 330 relates to a shaft furnace employing superimposed rows of burners.

### OBJECTS OF INVENTION

The technical task of the present invention therefore is to provide a furnace for producing lime which should allow obtaining an even thermal load inside the baking chamber, preventing the concurrent presence of zones of excessive baking and zones of insufficient baking that finally cause a poor quality product.

This object is achieved by the furnace for producing lime according to the annexed claim 1.

Thanks to the presence of at least two groups of overlapped burners, having respective inlets substantially equally spaced from the axis of the baking chamber, and at decreasing distances in the dropping direction of the material being baked, an even distribution of the thermal load is obtained inside the same chamber, since the same burners are effectively operating in respective circular or annular zones of the chamber that substantially cover the entire section thereof.

A homogeneous calcium oxide is thus obtained, of a high quality and low reactivity, without phenomena of overbaked and/or non-baked material.

Further advantageous features are described in the dependent claims.

### BRIEF DESCRIPTION OF THE DRAWINGS

The features of the invention shall be better understood by any man skilled in the art from the following description and annexed drawing tables, provided by way of a non-limiting example, wherein:
- figure 1 shows a diametrical section of the furnace according to the present invention;
- figure 2 shows a cross section of the furnace according to plane II-II of figure 1;
- figure 3 shows a cross section of the same furnace according to plane III-III of figure 1;
- figure 4 shows a cross section of the same furnace according to plane IV-IV of figure 1;
- figure 5 shows a diametrical section of the furnace according to the present invention, in another embodiment;
- figure 6 shows a cross section of the furnace according to plane VI-VI of figure 5;
- figure 7 shows a cross section of the furnace according to plane VII-VII of figure 5;
- figure 8 shows a cross section of the furnace according to plane VIII-VIII of figure 5.

### EMBODIMENTS OF THE INVENTION

It is first of all to be noted that in the following embodiments, single specific features described with reference to specific embodiments are actually interchangeable with other different features, existing in other embodiments.

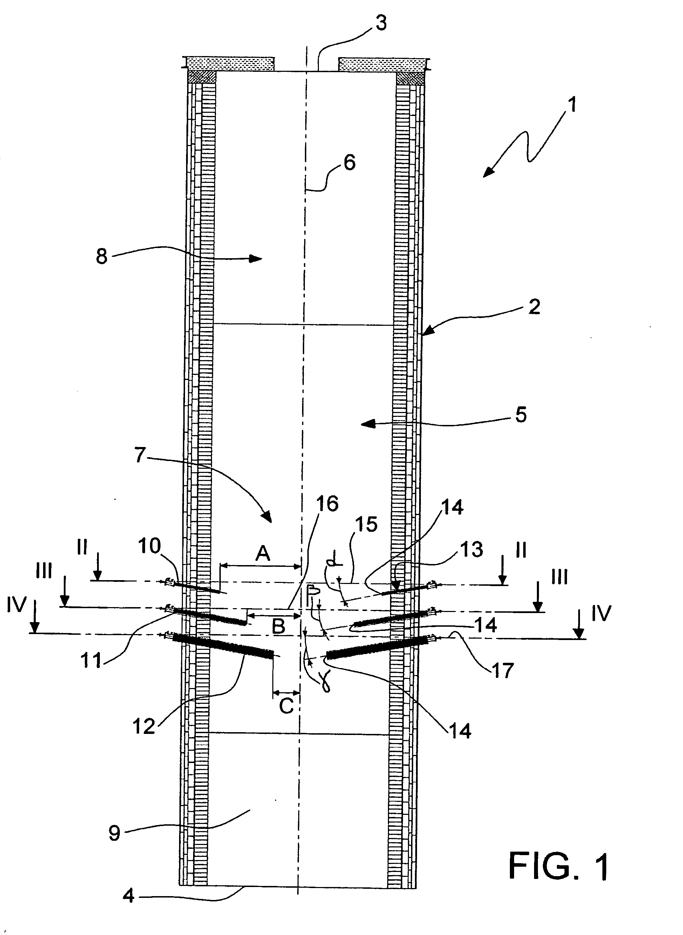

With reference to the annexed figure 1, reference numeral 1 globally indicates a furnace for producing calcium oxide according the present invention, in an embodiment thereof.

The furnace comprises a container, globally indicated with reference numeral 2; container 2 has a cylindrical shape with circular section, and is arranged vertically.

Container 2 is made, for example, of refractory material, or of a material of another nature, with suitable features of resistance to high temperatures.

At the top thereof, container 2 comprises an inlet 3 for the calcareous material; such calcareous material is introduced in furnace 1 in the form, for example, of stones of a variable size.

At inlet 3 of container 2 there are provided traditional means for feeding the calcareous material, not shown for simplicity and because they do not in any case constitute an object of the present invention.

At the base thereof, container 2 comprises an outlet 4 for the material produced in furnace 1, which is generated by the baking of the calcareous material introduced from inlet 3. At outlet 4 there are provided means, not shown for simplicity, for collecting and conveying the material produced in furnace 1. Such means are of the known and traditional type and do not in any case constitute an object of the present invention.

Container 2 internally comprises a baking chamber 5 for the calcareous material introduced from inlet 3. The baking chamber 5 comprises a central axis 6, which is coincident with the symmetry axis of container 2.

The baking chamber 5 further comprises a calcination zone 7 for the calcareous material, wherein the chemical reaction for forming the calcium oxide takes place, substantially located at the central portion of container 2.

The baking chamber 5 comprises a heating zone 8 for the calcareous material, located at the top of container 2 at inlet 3; the baking chamber 5 further comprises a cooling zone 9 for the calcium oxide produced from the reaction occurred in the calcination zone 7.

Burners 10, 11, 12 are provided in the calcination zone 7 of the baking chamber 5 which provide the thermal energy required for the chemical reaction of transformation of the calcareous material into calcium oxide to take place.

The furnace comprises means for feeding the fuel to burners 10, 11, 12, which in figure 1 are not shown as they are of the essentially known and traditional type, and which therefore do not require further analysis in the present description.

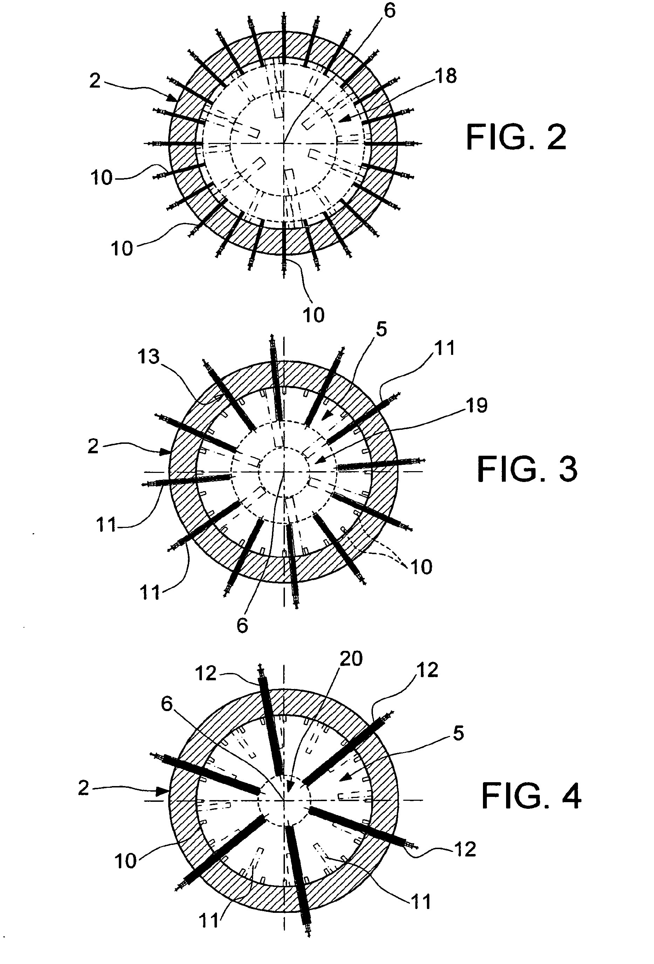

As is also visible in figures 2, 3, 4, burners 10, 11, 12 are inserted into respective through holes 13 through the thickness of container 2.

More in detail, the furnace comprises at least a first group of burners 10 positioned, with the respective inlets 14, substantially at a same first distance A from the central axis 6 of the baking chamber 5, and at least a second group of burners 11 positioned, with the respective inlets 14, substantially at a same second distance B from the central axis 6; moreover, the first group of burners 10 is overlapped to the second group of burners 11 relative to the dropping direction of the calcareous material. The above second distance B is less than the above first distance A, as is visible in figure 1.

This arrangement of the first and of the second group of burners 10, 11, as shall be better explained hereinafter, allows an even distribution of the thermal load inside the baking chamber 5, with consequent improvement of the quality of the product made inside furnace 1.

The furnace further comprises at least a third group of burners 12, positioned underneath the second group of burners 11. Burners 12 of the third group are placed at a same third distance C from the central axis 6: as is seen in figure 1, the third distance C is less than the second distance B.

Burners 10 of the first group are substantially coplanar relative to each other; in other words, the intersections of the axes thereof with the cylindrical surface of container 2 are comprised in a first plane 15 that is orthogonal to the central axis 6.

The burners of the first group 10, moreover, are inclined by a same first predetermined angle α relative to the first plane 15, with advantages that shall be better explained hereinafter.

With reference now to figure 2, which shows a section of the furnace taken exactly at the above first plane 15, it is noted that burners 10 of the first group are arranged angularly equally spaced from each other. By way of an example only, they are twenty-four but clearly they may be in any number, in relation to the specific application requirements.

Likewise, burners 11 of the second group are substantially coplanar relative to each other, that is, the intersections of the axes thereof with the cylindrical surface of container 2 are comprised in a second plane 16 that is orthogonal to the central axis 6.

Moreover, the burners of the second group are inclined by a second predetermined angle β relative to the above second plane 16, with the advantages that shall be better explained hereinafter.

With reference now to figure 3, which shows a section of the furnace taken at the second plane 16, it is noted that also burners 11 of the second group are arranged angularly equally spaced from each other. Their number is at least half the number of burners of the first group 10.

Likewise, burners 12 of the third group are substantially coplanar relative to each other, that is, the intersections of the axes thereof with the cylindrical surface of container 2 are comprised in a third plane 17 that is orthogonal to the central axis 6.

Burners 12 of the third group 12, moreover, are inclined by a third predetermined angle γ relative to said third plane, with the technical advantages that shall be better explained hereinafter.

With reference now to figure 4, which shows a section of the furnace taken at the third plane 17, it is noted that also burners 12 of the third group are arranged angularly equally spaced from each other. Their number is at least half the number of burners of the second group 11.

With reference again to figure 1, burners 10 of the first group and burners 12 of the third group are arranged substantially axially equally spaced from burners 11 of the second group; in other words, the first plane 15 and the third plane 17 are substantially equally spaced from the second plane 16.

In other embodiments, the first plane 15 and the third plane 17 may be placed at different reciprocal distances from the second plane 16, in relation to the specific application requirements.

In the present embodiment of the furnace according to the invention, the second angle β and the third angle γ coincide with the first angle α. More in detail, by way of a non-limiting example only, such first, second, third angle α, β, γ are 10°.

The baking chamber 5 of the furnace is suitably pressurised, so as to prevent the forming of preferential passage channels for the calcareous material.

The arrangement of burners 10, 11, 12 in separate groups according to the features described allows obtaining important technical advantages.

In the first place, as may be seen looking at figures 1, 2, 3, 4, each group of burners 10, 11, 12 is effectively operating in different zones of the baking chamber 5. More in particular, the burners of the first group 10 - reference shall be made to figure 2 - effectively carry out the baking of the calcareous material at a first zone 18 of chamber 5 which, seen in section, consists of a circular rim, concentric to the central axis 6, with outer circumference substantially passing by inlets 14 of the burners of the first group 10, that is, having a radius equal to the first distance A, and inner circumference that may be imagined substantially and ideally as passing by inlets 14 of the burners of the second group 11, that is, having radius equal to the second distance B.

Actually, the first baking zone 18, thanks to the inclination of the burners of the first group 10, also has a certain axial extension, which develops in the dropping direction of the calcareous material being baked.

Moreover, the burners of the second group 11 - reference shall be made to figure 3 - effectively carry out the baking of the calcareous material at a second zone 19 of chamber 5 which, seen in section, again consists of a circular rim, concentric to the central axis 6, with outer circumference substantially passing by inlets 14 of the burners of the second group 11, that is, with a radius equal to the second distance B, and inner circumference that may be imagined substantially and ideally as passing by the inlets of the burners of the third group 12, that is, having radius equal to the third distance C. The second zone 19, therefore, is substantially circumscribed by the first zone 18

The second baking zone 19, thanks to the inclination of the burners of the second group 11, actually has also a certain axial extension, which develops in the dropping direction of the material being baked.

The same applies also to the burners of the third group 12: in section, they are effectively effective in a third zone 20 of chamber 5 which substantially is a circle concentric to the central axis, with radius equal to the third distance C. Therefore, the third zone 20 is substantially circumscribed by the second zone 19.

Clearly, also the third zone 20 has a certain axial extension in the dropping direction of the material being baked.

In brief, therefore, the first, second, third group of burners 10, 11, 12 are respectively operating in the first, second and third zone 18, 19, 20 so that the combination of these last mentioned covers substantially the entire volume of the end portion of the calcination zone 7: in these zones 18, 19, 20, therefore, the thermal load is substantially even, as any particle or portion, even small, of the dropping material always is sufficiently close to at least one inlet of one of the burners of groups 10, 11, 12. Moreover, the inclination of the burners of groups 10, 11, 12, with reference to the respective planes 15, 16, 17, allows extending the above zones 18, 19, 20 also in the axial direction, thus creating a wide volume wherein the thermal load is substantially even. Moreover, the inclination of the burners of groups 10, 11, 12, relative to the respective planes 15, 16, 17 allows obtaining a further important advantage, consisting in the significant reduction of the "sharping" effect, that is, the scraping on the surface of the same burners 10, 11, 12 due to the continuous shocks and frictions of the calcareous stones, even of small size, resulting from the crushing which, as known, largely exhibit also sharp and pointed edges. In other words, the inclination imparted to burners 10, 11, 12 allows reducing the impact angle of the calcareous stones on the surface of the same burners: in this way, the effect of surface scraping is limited, which if very strong would require the frequent maintenance and/or replacement of the same burners.

It has thus been seen that the invention achieves the intended objects.

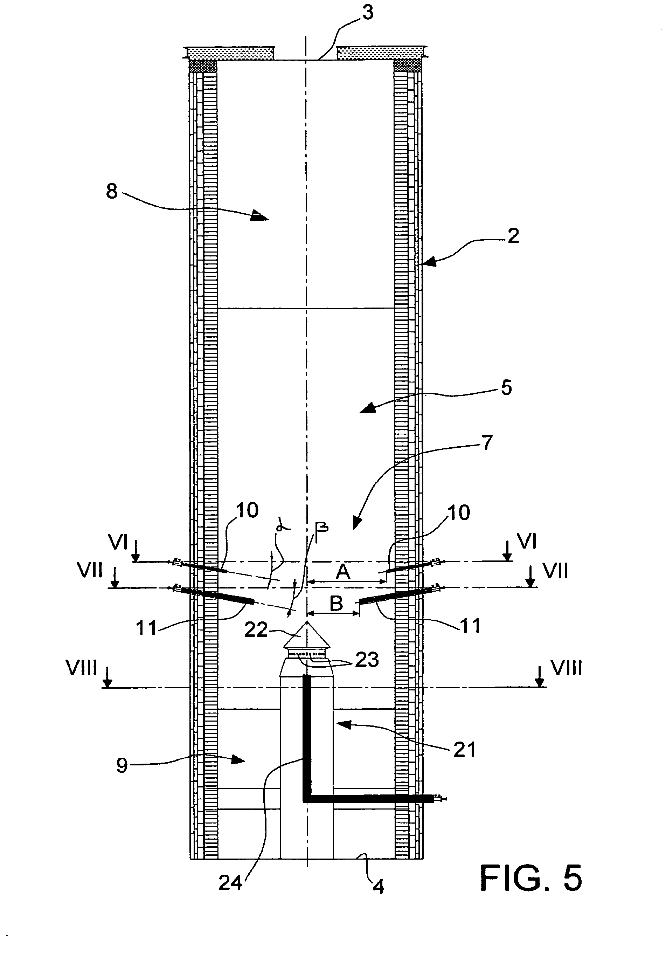

Another embodiment of the furnace according to the present invention is shown in figures 5, 6, 7, 8.

In the following description, the parts corresponding to those of figures 1, 2, 3, 4 are indicated by the same reference numerals and shall not be described further.

In this embodiment, furnace 1 comprises an axial burner 21 within the baking chamber 5. Such axial burner 21 is placed at the base of container 2.

The axial burner 21 has a substantially mushroom-like shape, of the known type, with a top cap 22 and a series of external holes 23, whereto the fuel arrives from a single bottom manifold 24.

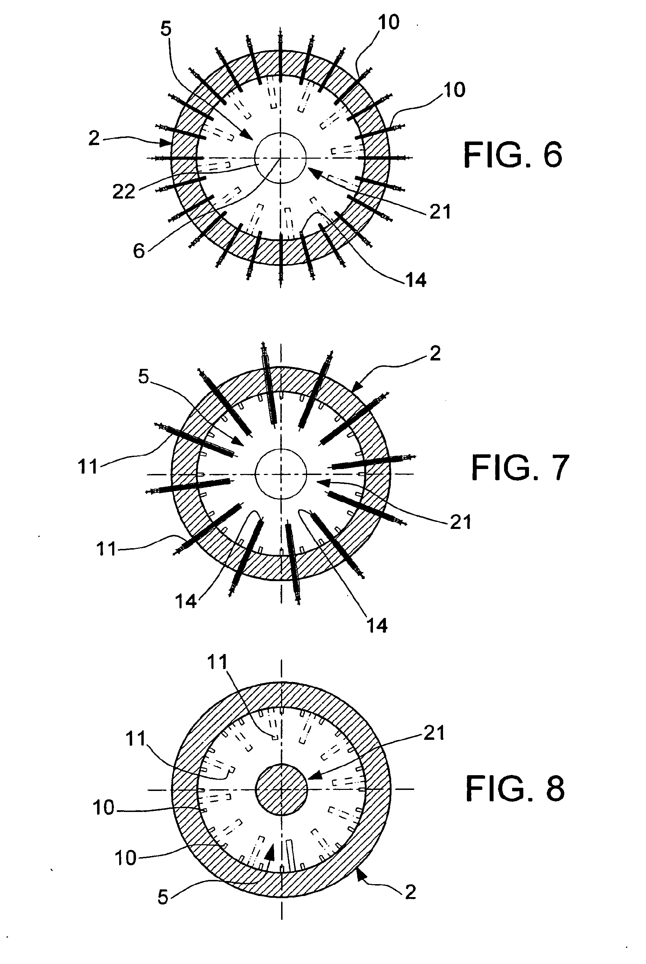

In this embodiment, in the practice, the axial burner 21 replaces the third group of burners 12 present in the above embodiment. As may be seen in figure 5 and also in figures 6, 7, the burners of the first group 10 and of the second group 11 are substantially identical to those described in the previous embodiment, and shall not be described further.

This embodiment of the furnace according to the invention is particularly advantageous in the situations where the required production of calcium oxide is high, and thus accordingly the furnace has a large diameter. In fact, the axial burner 21 contributes to the baking of the calcareous material just in the central portion, where external burners, although of quite large size, like those of the first group 10 and of the second group 11, could not operate effectively from the point of view of the thermal load. The present invention has been described according to preferred embodiments but equivalent versions may be conceived without departing from the scope of protection offered by the following claims.

## Claims

1. Furnace for producing calcium oxide, comprising a container (2) which internally has a baking chamber (5) provided with a central axis (6) and with a calcination zone (7) for the calcareous material, provided with a first group of burners (10) positioned, with the respective outlets (14), substantially at a same first distance (A) from said central axis (6), a second group of burners (11) positioned, with the respective outlets (14), substantially at a same second distance (B) from said axis (6), said first group of burners (10) being overlapped to said second group of burners (11) relative to the dropping direction of the calcareous material, and a third group of burners (12), positioned underneath said second group of burners (11), placed at a same third distance (C) from said axis, said burners of said first group (10), said burners of said second group (11) and said burners of said third group (12) being coplanar to one another respectively in a first plane (15), a second plane (16) and a third plane (17), the burners of said first group (10) being inclined by a first predetermined angle (α) relative to said first plane (15), the burners of said second group (11) being inclined by a second predetermined angle (β) relative to said second plane (17), **characterised in that** the number of burners of said second group (11) is at least half the number of burners of said first group (10) and wherein the number of burners of said third group (12) is at least half the number of burners of said second group (11), the burners of said third group (12) being inclined by a third predetermined angle (γ) relative to said third plane (17), said second distance (B) being smaller than said first distance (A), said third distance (C) being smaller than said second distance (B).

2. Furnace according to claim 1, wherein said first group of burners (11) and said third group of burners (12) are axially equally spaced from said second group of burners (11).

3. Furnace according to claim 1, wherein said burners of said first group (10) and/or of said second group (11) are equally spaced from one another.

4. Furnace according to claim 1, wherein said container (2) has a substantially cylindrical shape.

5. Furnace according to claim 1, wherein said burners of said first group (10) and/or of said second group (11) and/or of said third group (12) are angularly equally spaced from one another.

6. Furnace according to claim 1, wherein the burners of said first group (10) and/or of said second group (11) and/or of said third group (12) are inserted in respective through holes (13) in said container (2).

7. Furnace according to one of the previous claims, comprising at least one axial burner (21) placed at the base of said container (2).

8. Furnace according to claim 4, wherein said burners of the first group (10) are operating in a first zone (18) of the baking chamber (5) which, in section, consists of a circular rim concentric to said central axis (6).

9. Furnace according to claim 8, wherein said burners of the second group (11) are operating in a second zone (19) of the baking chamber (5) which, in section, consists of a circular rim concentric to said central axis (6), substantially circumscribed by said first zone (18).

10. Furnace according to claim 9, wherein said burners of the third group (12) are operating in a third zone of the baking chamber (5) which, in section, consists of a circle, concentric to said central axis (6), substantially circumscribed by said second zone (19).

11. Furnace according to claim 1, wherein said second angle (β) coincides with said first angle (α).

12. Furnace according to claim 11, wherein said third angle (γ) coincides with said second angle (β) and with said first angle (α).

## Patentansprüche

1. Brennofen zur Herstellung von Calciumoxid, der einen Behälter (2) umfasst, der innen eine Brennkammer (5) aufweist, die mit einer Mittelachse (6) und mit einer Kalzinierungszone (7) für das kalkhaltige Material versehen ist, die mit einer ersten Gruppe von Brennern (10), die, mit den jeweiligen Auslässen (14), im Wesentlichen in einem gleichen ersten Abstand (A) von der Mittelachse (6) positioniert sind, einer zweiten Gruppe von Brennern (11), die, mit den jeweiligen Auslässen (14), im Wesentlichen in einem gleichen zweiten Abstand (B) von dieser Achse (6) positioniert sind, wobei die erste Gruppe von Brennern (10) der zweiten Gruppe von Brennern (11) bezogen auf die Fallrichtung des kalkhaltigen Materials überlagert ist, und einer unterhalb der zweiten Gruppe von Brennern (11) positionierten dritten Gruppe von Brennern (12) versehen ist, die in einem gleichen dritten Abstand (C) von dieser Achse angeordnet sind, wobei die Brenner der ersten Gruppe (10), die Brenner der zweiten Gruppe (11) und die Brenner der dritten Gruppe (12) jeweils in einer ersten Ebene (15), einer zweiten Ebene (16) und einer dritten Ebene (17) zueinander komplanar sind, wobei die Brenner der ersten Gruppe (10) um einen ersten vorbestimmten Winkel (α) zur ersten Ebene (15) geneigt sind und die Brenner der zweiten Gruppe (11) um einen zweiten vorbestimmten Winkel (β) zur zweiten Ebene (16) geneigt sind, **dadurch gekennzeichnet, dass** die Anzahl von Brennern der zweiten Gruppe (11) mindestens die Hälfte der Anzahl von Brennern der ersten Gruppe (10) beträgt, und wobei die Anzahl von Brennern der dritten Gruppe (12) mindestens die Hälfte der Anzahl von Brennern der zweiten Gruppe (11) beträgt, wobei die Brenner der dritten Gruppe (12) um einen dritten vorbestimmten Winkel (γ) zur dritten Ebene (17) geneigt sind, wobei der zweite Abstand (B) kleiner als der erste Abstand (A) ist, wobei der dritte Abstand (C) kleiner als der zweite Abstand (B) ist.

2. Brennofen nach Anspruch 1, wobei die erste Gruppe von Brennern (10) und die dritte Gruppe von Brennern (12) axial gleichmäßig von der zweiten Gruppe von Brennern (11) beabstandet sind.

3. Brennofen nach Anspruch 1, wobei die Brenner der ersten Gruppe (10) und/oder der zweiten Gruppe (11) gleich weit voneinander beabstandet sind.

4. Brennofen nach Anspruch 1, wobei der Behälter (2) eine im Wesentlichen zylindrische Form hat.

5. Brennofen nach Anspruch 1, wobei die Brenner der ersten Gruppe (10) und/oder der zweiten Gruppe (11) und/oder der dritten Gruppe (12) winkelmäßig gleichmäßig voneinander beabstandet sind.

6. Brennofen nach Anspruch 1, wobei die Brenner der ersten Gruppe (10) und/oder der zweiten Gruppe (11) und/oder der dritten Gruppe (12) in jeweilige Durchgangslöcher (13) in dem Behälter (2) eingefügt sind.

7. Brennofen nach einem der vorhergehenden Ansprüche, der mindestens einen axialen Brenner (21) umfasst, der an der Basis des Behälters (2) angeordnet ist.

8. Brennofen nach Anspruch 4, wobei die Brenner der ersten Gruppe (10) in einer ersten Zone (18) der Brennkammer (5) arbeiten, die, im Querschnitt, aus einem ringförmigen Kranz besteht, der konzentrisch zur Mittelachse (6) ist.

9. Brennofen nach Anspruch 8, wobei die Brenner der zweiten Gruppe (11) in einer zweiten Zone (19) der Brennkammer (5) arbeiten, die, im Querschnitt, aus einem ringförmigen Kranz besteht, der konzentrisch zur Mittelachse (6) ist, und im Wesentlichen von der ersten Zone (18) eingegrenzt wird.

10. Brennofen nach Anspruch 9, wobei die Brenner der dritten Gruppe (12) in einer dritten Zone (19) der Brennkammer (5) arbeiten, die, im Querschnitt, aus einem Ring besteht, der konzentrisch zur Mittelachse (6) ist, und im Wesentlichen von der zweiten Zone (19) eingegrenzt wird.

11. Brennofen nach Anspruch 1, wobei der zweite Winkel (β) mit dem ersten Winkel (α) übereinstimmt.

12. Brennofen nach Anspruch 11, wobei der dritte Winkel (γ) mit dem zweiten Winkel (β) und mit dem ersten Winkel (α) übereinstimmt.

## Revendications

1. Four pour produire de l'oxyde de calcium, comprenant un récipient (2) qui comporte à l'intérieur une chambre de cuisson (5) avec un axe central (6) et avec une zone de calcination (7) pour le matériau calcaire, pourvu d'un premier groupe de brûleurs (10) positionné, avec les sorties respectives (14), sensiblement à une même première distance (A) dudit axe central (6), d'un deuxième groupe de brûleurs (11) positionné, avec les sorties respectives (14), sensiblement à une même deuxième distance (B) dudit axe (6), ledit premier groupe de brûleurs (10) étant superposé audit deuxième groupe de brûleurs (11) par rapport à la direction de descente du matériau calcaire, et d'un troisième groupe de brûleurs (12), positionné au-dessous dudit deuxième groupe de brûleurs (11), placé à une même troisième distance (C) dudit axe, lesdits brûleurs dudit premier groupe (10), lesdits brûleurs dudit deuxième groupe (11) et lesdits brûleurs dudit troisième groupe (12) étant coplanaires entre eux respectivement dans un premier plan (15), un deuxième plan (16) et un troisième plan (17), les brûleurs dudit premier groupe (10) étant inclinés d'un premier angle prédéterminé (α) par rapport audit premier plan (15), les brûleurs dudit deuxième groupe (11) étant inclinés d'un deuxième angle prédéterminé (β) par rapport audit deuxième plan (16), **caractérisé en ce que** le nombre de brûleurs dudit deuxième groupe (11) est au moins la moitié du nombre de brûleurs dudit premier groupe (10) et dans lequel le nombre de brûleurs dudit troisième groupe (12) est au moins la moitié du nombre de brûleurs dudit deuxième groupe (11), les brûleurs dudit troisième groupe (12) étant inclinés d'un troisième angle prédéterminé (γ) par rapport audit troisième plan (17), ladite deuxième distance (B) étant inférieure à ladite première distance (A), ladite troisième distance (C) étant inférieure à ladite deuxième distance (B).

2. Four selon la revendication 1, dans lequel ledit premier groupe de brûleurs (10) et ledit troisième groupe de brûleurs (12) sont espacés axialement d'une même distance dudit deuxième groupe de brûleurs (11).

3. Four selon la revendication 1, dans lequel lesdits brûleurs dudit premier groupe (10) et/ou dudit deuxième groupe (11) sont espacés d'une même distance les uns par rapport aux autres.

4. Four selon la revendication 1, dans lequel ledit récipient (2) a une forme sensiblement cylindrique.

5. Four selon la revendication 1, dans lequel lesdits brûleurs dudit premier groupe (10) et/ou dudit deuxième groupe (11) et/ou dudit troisième groupe (12) sont espacés angulairement de façon égale les uns par rapport aux autres.

6. Four selon la revendication 1, dans lequel les brûleurs dudit premier groupe (10) et/ou dudit deuxième groupe (11) et/ou dudit troisième groupe (12) sont insérés dans des trous passants respectifs (13) dans ledit récipient (2).

7. Four selon une des revendications précédentes, comprenant au moins un brûleur axial (21) placé au niveau de la base dudit récipient (2).

8. Four selon la revendication 4, dans lequel lesdits brûleurs du premier groupe (10) fonctionnent dans une première zone (18) de la chambre de cuisson (5) qui, en coupe, consiste en un bord circulaire concentrique audit axe central (6).

9. Four selon la revendication 8, dans lequel lesdits brûleurs du deuxième groupe (11) fonctionnent dans une deuxième zone (19) de la chambre de cuisson (5) qui, en coupe, consiste en un bord circulaire concentrique audit axe central (6), sensiblement circonscrit par ladite première zone (18).

10. Four selon la revendication 9, dans lequel lesdits brûleurs du troisième groupe (12) fonctionnent dans une troisième zone de la chambre de cuisson (5) qui, en coupe, consiste en un cercle, concentrique audit axe central (6), sensiblement circonscrit par ladite deuxième zone (19).

11. Four selon la revendication 1, dans lequel ledit deuxième angle (β) coïncide avec ledit premier angle (α).

12. Four selon la revendication 11, dans lequel ledit troisième angle (γ) coïncide avec ledit deuxième angle (β) et avec ledit premier angle (α).
